(19) Europäisches Patentamt
European Patent Office
Office européen des brevets

(11) **EP 2 515 683 B1**

(12) **EUROPEAN PATENT SPECIFICATION**

(45) Date of publication and mention
of the grant of the patent:
**18.09.2013 Bulletin 2013/38**

(21) Application number: **10784532.3**

(22) Date of filing: **30.11.2010**

(51) Int Cl.:
*A23L 1/39* *(2006.01)*        *A23L 1/03* *(2006.01)*
*A23L 1/05* *(2006.01)*        *A23L 1/056* *(2006.01)*
*A23L 1/22* *(2006.01)*        *A23L 1/40* *(2006.01)*
*A23L 1/0526* *(2006.01)*      *A23L 1/0532* *(2006.01)*
*A23L 1/054* *(2006.01)*

(86) International application number:
**PCT/EP2010/068491**

(87) International publication number:
**WO 2011/076528 (30.06.2011 Gazette 2011/26)**

(54) **SAVOURY FOOD CONCENTRATE**

WOHLSCHMECKENDES NAHRUNGSMITTELKONZENTRAT

CONCENTRÉ ALIMENTAIRE GOÛTEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2009 EP 09180754**

(43) Date of publication of application:
**31.10.2012 Bulletin 2012/44**

(73) Proprietors:
• **Unilever NV**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC**
**London EC4Y 0DY (GB)**
Designated Contracting States:
**CY GB IE MT**

(72) Inventors:
• **INOUE, Chiharu**
**NL-3133 AT Vlaardingen (NL)**
• **SILVA PAES, Sabrina**
**NL-3133 AT Vlaardingen (NL)**
• **PERRINE, Marion Esclarmonde**
**74074 Heilbronn (DE)**
• **POPP, Alois Konrad**
**NL-3133 AT Vlaardingen (NL)**
• **SAILER, Winfried**
**74074 Heilbronn (DE)**
• **VERSLUIS, Pieter**
**NL-3133 AT Vlaardingen (NL)**

(74) Representative: **Reijns, Tiemen Geert Pieter
Olivier van Noortlaan 120
3133 AT Vlaardingen (NL)**

(56) References cited:
**EP-A1- 0 509 657        WO-A1-03/015538
WO-A1-2007/068484        US-A- 4 140 809
US-A- 6 086 937**

**Description**

The present invention relates to a savoury food concentrate in the form of a gel. It further relates to a process to prepare such a food concentrate. It further relates to the use of said food concentrate to prepare a bouillon, soup, sauce, gravy or for use as a seasoning. It further relates to a ready to eat food product comprising at least part of said food concentrate in a dissolved form. It further relates to the use of a liquid polyol to increase the texture of a savoury food concentrate in the form of a gel.

**Background of the invention**

Savoury food concentrates in the form of a gel are known and introduced to the market as an alternative to conventional hard or pasty savoury food concentrates, also known as bouillon cubes. They have been described for example in WO2007/068484. Like conventional bouillon cubes, the savoury food concentrates in the form of a gel may be dissolved in water, to result in a ready to eat food product such as a bouillon or a soup. In addition they may be added at least partly, to a dish during or after the cooking process, in which they dissolve and are diluted, in this way to function as a seasoning. Dilution may be done in water or in a (semi liquid) dish. The flavour and/or salt concentration of savoury food concentrates does not allow them to be eaten as they are.

Despite the spectacular advantages that the food concentrate in the form a gel offers to the consumer compared to the traditional hard or pasty cubes, in terms of fresh appearance and the possibility to include non-dehydrated, wet ingredients in the concentrate, conventional savoury food concentrates in the form a gel still show some relevant drawbacks.

WO03/015538 discloses a composite food having a gelling agent and a flavouring and/or texturing component, uniformly distributed throughout, with the remainder of the composite made up primarily of water. The composite food product is substantially solid and self-sustaining at ambient temperature. The document further relates to a method for preparing a flavoured end/or textured food item for service by providing a  servable portion of an optionally cooked food item, removing a servable portion of the sustainable food product from the food product, contacting the servable food portion with the servable food item portion to form a flavoured and/or textured food item combination, normally arranged with the product on top of the food item, and optionally heating the flavoured and/or textured food item combination to prepare the food item for service. This document does not relate to concentrates and is silent about the presence a liquid polyol.

WO2007/068484 relates to concentrates for preparing a bouillon, broth, soup, sauce, gravy or for use as a seasoning, which concentrates comprise 20-80% water, 0.5-60% (pieces of) herbs, vegetables, meat, fish or crustaceans, 3-30% salt and a gelling agent comprising xanthan and locust bean gum. This document is silent about the presence of a liquid polyol.

US 4,140,809 relates to a variety of soup concentrates, each containing meat or vegetable particulates, or both, is prepared with a water soluble solids content sufficient to prevent the soup concentrate to solidifying at home freezer temperatures (0° F. to 15 ° F.) and thereby effects a readily spoonable, semi-rigid consistency which lends itself to single serving dispensing and dilution with hot water to form an excellent quality soup. This document is silent about the presence of a liquid polyol.

US6086937 relates to a composition, preferably fat continuous, of a scoopable or spoonable consistency for the preparation of sauces by addition of water and heating, comprising 5-80 parts by weight of fat, 0.5-15 parts by weight of water dispersible milk ingredients, 1-20 parts by weight of starch or a starch like product, up to 40 parts by weight of water, taste and or flavor compounds, and, optionally 0.25-5 parts by weight of gelatin or similar hydrocolloid. This document is silent about the presence of a liquid polyol.

A problem observed in conventional food concentrates in the form of a gel, such as known for example from WO2007/068484, is "re-jellification". That is when a ready to eat food product such as a soup or a bouillon, obtained by dissolving the food  concentrate in the form of a gel in hot water, is allowed to cool down to temperatures lower than about 60 to 50°C, the ready to eat food product may form a gel again: a layer of gelled material may appear on the bouillon or the soup liquid that may comprise for example proteins, fat or gelling system. In other cases, the re-jellification may not be limited to a layer, but may be extended to the entire ready-to-eat food product, showing an increase in viscosity of the ready-to-eat food product. Such re-jellification may be considered as unappealing by the consumer.

A further problem observed with some conventional savoury food concentrates in the form of gel is that when such a concentrate is added to a hot cooking pot at for example about 150°C, the melting concentrate in the form of a gel may splatter and sizzle, and further may show formation of residue material, which may appear as unattractive for a consumer. The melting time of the concentrate in the cooking pot may be relatively long.

A further problem observed with conventional savoury food concentrates in the form of a gel is that during storage the gel may show syneresis. For example, agar-agar based concentrates appeared to be sensitive for syneresis. Syneresis is the phenomenon that liquid separates from the gel by, for example, expulsion. As a result, the concentrate in the form of a gel may swim in syneresis liquid in the packaging, which may be unappealing for the consumer.

Hence, there is a need for a food concentrate in the form of a gel that solves one or more problems mentioned above.

## Summary of the invention

Surprisingly, at least part of the above mentioned problems were solved by a packaged savoury food concentrate in the form of a gel, for preparing a bouillon, a soup, a sauce, a gravy or for use as a seasoning comprising:

- a gelling system,
- a liquid phase comprising a liquid polyol,
- from 3%wt to 30%wt of salt, based on the weight of the total food concentrate.

In a further aspect, the present invention relates to a process to prepare a packaged savoury food concentrate in the form of a gel, for preparing a bouillon, a soup, sauce, gravy or for use as a seasoning, comprising the steps of:

a) providing a solution comprising:

- a gelling system,
- a liquid polyol,
- from 3%wt to 30%wt of salt, based on the weight of the total food concentrate.

b) transferring the solution resulting from step a) to a packaging,
c) closing the packaging of step b) to obtain a packaged savoury food concentrate in the form of a gel, for preparing a bouillon, a soup, sauce, gravy or for use as a seasoning.

In a further aspect the present invention relates to the use of the concentrate according to the invention to prepare a bouillon, soup, sauce, gravy or for use as a seasoning.

In a further aspect, the present invention relates to a ready to eat food composition comprising at least part of a food concentrate of the present invention in a dissolved form.

## Detailed description of the invention

### Definitions

The product of the present invention is a savoury food concentrate for preparing a bouillon, a soup, a sauce, a gravy or for use as a seasoning. Although the skilled artisan will understand the meaning of the term "savoury", it is usually defined as "not tasting sweet", when the product is diluted to the concentration ready- to- be- eaten. Some sugar may be present in the savoury food concentrate, but the overall impression of the resulting ready- to- eat food product should not be primarily sweet without a savoury note. Relatively high amounts of salt and of monosodium glutamate or other umami taste providing substances may contribute to the savoury character of the product. Typical products which may show a savoury taste are for example bouillon, soup, sauce and gravy applications. These food categories are mentioned as a general indication.

The term "food concentrate" as used in the present application is meant to describe a food product which is not ready for consumption until after diluting it in an aqueous liquid or a dish. Although in the latter case when it is added to a dish, like cooked rice, strictly speaking it is not diluted, for the present purpose we will refer to this as dilution. The concentration of at least one of the ingredients of the concentrate does not allow consumption which is considered normal or pleasant to a consumer. For example, it may be considered too salty or too strong in taste. "Food concentrate" is used here as the opposite of "ready- to- eat food product". A "ready- to- eat food product" typically does not need a dilution step before consumption. The food concentrate needs preferably to be diluted at least 1 time (weight/ weight), based on the weight of the food concentrate, to result in a ready- to- eat food product. That is the food concentrate preferably has to be mixed at least with the same amount of liquid or dish e.g. pasta, rice, potato, vegetable or meat. The salt content in the concentrate is at least two times higher than the salt content in the read- to- eat food. Typical dilution factors for bouillon and seasoning are in range of from 1: 1 to 1: 50.Typical dilution factors for soups and sauces are from 1: 1 to 1: 40. For example, a liquid savoury product comprising up to 1.5% (w/w) of salt (NaCl), based on the total product, is considered a ready to eat food product, whereas a product comprising 3% (w/w) or 10% (w/w) of salt or more is considered a food concentrate. A seasoning product in the context of the present invention should preferably be added to the dish, meat or vegetables before or during cooking or frying. It can be e.g. a marinade or a stir- fry mixture.

The seasoning concentrate can also be added to already cooked product but has to be mixed well before consumption to avoid too high concentrations of salt or flavour at one spot. Thus, a food concentrate is preferably recommended for consumption after dilution of the concentrate with the factors as described above. The term "relatively high salt content" may preferably be construed as a salt concentration of preferably between 5wt% and 30 wt%, more preferably of between 10wt% and 20 wt%, based on the weight of the total food concentrate.

Physical properties of the gel

A savoury food concentrate in the form of a gel according to the present invention comprises a liquid phase. The liquid phase comprises a liquid polyol. During production of the gel, several ingredients may be mixed into the liquid phase or may be dissolved in it. The savoury food concentrate in the form of a gel according to the present invention further comprises a gelling system. The gelling system normally is dissolved in the liquid phase. The food concentrate further comprises salt. Salt will be dissolved in the liquid phase. Besides the liquid phase, the savoury food concentrate in the form of a gel according to the present invention may comprise particles. To provide a gel, the liquid phase and preferably the dissolvable ingredients like e.g. salt and the gelling system are preferably heated and are allowed to cool. After cooling the solution solidifies to a gel. Before or after heating preferably particles, like e.g. vegetable or meat particles may be added. Particles are normally dispersed in the liquid phase. The physical properties and the ingredients of the savoury food concentrate in the form of a gel according to the present invention will be described below.

The present invention relates to a food concentrate in the form of a gel and preferably has the rheology of a gel. A gel is preferably not pourable at ambient temperature, like a salad dressing or ketchup. It is preferably not a paste, like e.g. peanut butter or tomato puree, or has preferably not the consistency of a dough, which can be elongated and stretched without breaking and like a dough can be reconstituted again after breakage by sticking the pieces together. The food concentrate of the present invention preferably will break upon stretching. Preferably, it cannot be reconstituted again after breakage by sticking the pieces together. Sticking together should be interpreted as contacting the pieces, possibly with some mechanical pressure like kneading, but without the help of sticking agent or temperature changes resulting in e.g. freezing or melting of the gel. A gel will usually have a smooth surface appearance. It is preferably shape-retaining at ambient temperature of e.g. 20°C when exposed to gravity, but easily deformable (maintaining its elasticity). The savoury food concentrate in the form of a gel of the present invention preferably is a shape stable gel at 20°C. "Shape stable" should be interpreted here as that it is not a flowable product at 20°C. It is a gelled product and can preferably deform (easily) under pressure. The deformation is substantially only elastic deformation. Preferably. the savoury food concentrate in the form of a gel, when removed from its packaging, maintains its shape at 20°C and is not substantially deformed by gravity. By choosing the amount and where appropriate the ratio of the gelling agents in the gelling system the desired rheology can be obtained.

Preferably, the food concentrate in the form of a gel of the present invention has a limiting strain for linear viscoelastic behavior ($\gamma_l$) of at least 10%. The limiting strain for linear viscoelastic behavior ($\gamma_l$) can be used as a measure for the solidity and the elasticity of the gel. In the present invention, the limiting strain for linear viscoelastic behavior ($\gamma_l$) is preferably measured in the following way: Samples are introduced into a rheometer capable of performing oscillatory measurement with sufficient sensitivity, such as for example a rheometer of TA instruments. The measuring temperature is 20 °C. For the gelled food concentrates best results are achieved if the sample is molten in the rheometer and subsequently cooled back to the measuring temperature of 20°C. All samples are rested for 10 minutes at 20°C. A strain sweep experiment is performed, and the G' is recorded as function of the amplitude of the strain. Typically the strain is increased from 0.01% to 500% in small, logarithmically divided steps. At low strain values G' is independent of the applied strain (G'0) . At sufficiently high strain, G' starts to drop. The strain at which the measured G' deviates 5% from the plateau G'0 is called the limiting strain, for linear viscoelastic behavior ($\gamma_l$) . See: Thomas G Mezger, The rheology handbook, Chapter 8.3.4.1. 2nd edition ISBN 3- 87870- 174- 8.

Measurement conditions: T=20°C, frequency=1 Hz. The experiment is preferably carried out with a suitable cone or plate geometry. Normal rheological precautions should be taken, such as: water evaporation from the sample should be avoided by applying a suitable solvent trap, or covering the sample exposed to air with a light mineral oil. In the case where wall slip might be expected, serrated or sand blasted measuring tools should be used. These are normal precautions for a skilled rheolog ist.

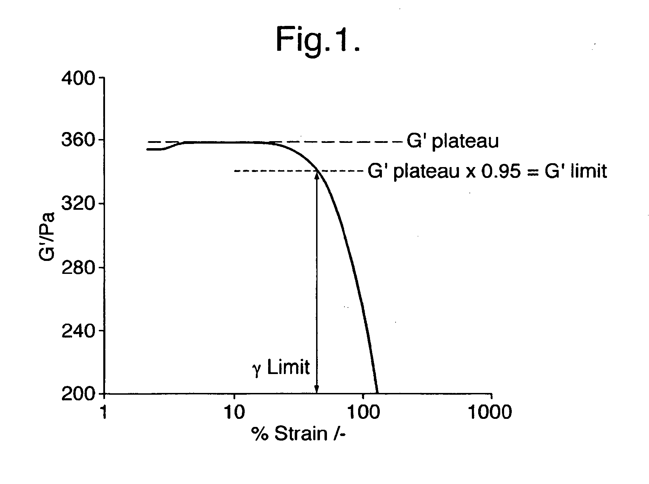

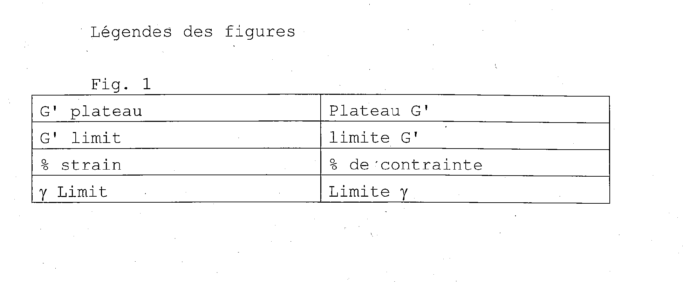

Figure 1 shows the outcome of a typical experiment. The limiting strain ($\gamma_l$) is found by interpolation to the proper G' value. The plateau value of G' can be calculated by taking the average of the measured G' values, where the G' is independent of the applied strain. This value is multiplied by 0.95 in the case when G' decreases with increasing strain. When G' increases with increasing strain, the plateau value G' is multiplied by 1.05. This value is called the G' limit. The G' limit is then found on the curve and the corresponding limiting strain value ($\gamma_l$) can be read from the graph or found by a suitable mathematical interpolation method.

Preferably, the term "gel" as used for the present invention is meant to describe a gel having a ratio of elastic modulus G' to viscous modulus G" of greater than 1. (see for example "Das Rheologie Handbuch, Thomas Mezger, Curt R. Vincentz- Verlag, Hannover, 2000") . The elasticity is preferably higher than the viscosity. The form of a gel generally can be achieved in an aqueous environment when sufficient gelling system is used in the formulation. For the present invention, a too rigid gel is not preferred, as this may be too brittle and may be damaged when removed from the packaging. The gel preferably is not sticky, and does not stick to the fingers of a consumer during use. Preferred rheology parameters are as follows:

In the present invention, preferably, the concentrate has a G' of between 30 and 50000 Pa. Preferably, G' is lower than 50000 Pa, more preferably lower than 10000 Pa, even more preferably lower than 5000 Pa, even more preferably lower than 2000 Pa, even more preferably lower than 1000 Pa, even more preferably lower than 500 Pa, most preferably lower than 400 Pa. G' is preferably higher than 30, more preferably higher that 50 Pa, even more preferably higher than 100 Pa, more preferably higher than 200 Pa.

The absolute value of the viscous modus G" is preferably greater than 1, more preferably greater than 5, even more preferably, greater than 10 Pa, most preferably greater than 50 Pa.

Preferably, the ratio of the elastic modulus G' to the viscous modulus G" is higher than 1 and lower than 1000. The ratio of G'/G" is preferably greater than 3, more preferably it is greater than 5. , Preferably, this ration is lower than 1000, more preferred lower than 200, even more preferably, lower than 100, most preferably lower than 50.

The above given values are preferably measured under the following circumstances:

- a maturation time of at least 12 h under ambient conditions, preferably 20C° and preferably a pressure of 1 atm,
- measurement temperature of 20 °C,
- an oscillatory frequency of 1 Hz and
- a strain in the linear viscoelastic region of 0.5%.

This set of parameters refers to a standard oscillatory test conducted with a standard state of the art low deformation rheometer as commercially available from e.g. Bohlin or TA Instruments.

It is preferred that the concentrate does not consist of a solid envelope material covering a core. It can also be preferred for some applications that the concentrate is translucent and/or transparent, apart from the visual elements like herbs, vegetables, meat, fish, crustaceans (or particulates thereof). Hence, of the matrix material (e.g. comprising water, a liquid polyol, a gelling system, and optionally salt, taste enhancers, oil) further comprising the visual elements like herbs, vegetables, meat, fish, crustaceans (or particulates thereof), the matrix material is preferably transparent and/or translucent.

Gelling system

The term "gelling system" refers to a material suitable to form a gel when dissolved in a liquid like water.

In the context of the present invention, the term gelling system is not limited to one gelling agent, but can also be a mixture of two or more gelling agents, each as such not necessarily a gelling agent on its own, provided together they can form a gel when dissolved in a liquid. A gelling system can in particular refer to a mixture of gelling and/or thickening agents that form an improved gelling system compared to the individual compounds on their own.

Preferably, the present invention relates to a concentrate comprising a gelling system comprising one of the group of gelling systems consisting of gelatin, , starch, modified starch, agar- agar, pectin, glucomannan, carrageenan, galactomannan in combination with xanthan gum, glucomannan in combination with xanthan gum, glucomannan in combination with carrageenan, glucomannan in combination with agar- agar, , galactomannan in combination with carrageenan, galactomannan in combination with agar agar, and mixtures thereof.

The gelling system is preferably present in an amount effective to provide a savoury food concentrate in the form of a gel. Preferably, the total amount of gelling system present in the concentrate of the present invention is from 0.1 to 30 w%, more preferably of from 0.5 to 15 wt%, based on the weight of the liquid phase.

The amount of gelling agent is calculated as (weight of gelling agent) / (weight of gelling agent + weight of liquid phase) x 100%.

In the present invention, the above mentioned gelling systems may be categorized in three, partly overlapping, groups: the gelling systems comprising starch, these without starch and the gelling systems comprising an interacting combination of gums.

Gelling systems comprising starch

The concentrate according to the invention may comprise starch as a gelling system. Preferably when starch is the only gelling system present in the food concentrate, it is preferably present in an amount of from 1 wt% to 30 wt%, more preferably in an amount of from 2 wt% to 25 wt%, most preferably in an amount of from 3 wt% to 15 wt%, based on the total weight of the liquid phase. Starch may be any form of starch, such as e.g. modified starch or non-modified starch. It may be corn starch, potato starch, or tapiaoca starch. Modified starch may be a preferred type of starch, as this may provide gels which can be better tailored to a specific desire as for example improved hot-paste viscosity or clarity of the resulting gel.

The gelling system can preferably comprise a combination of starch with gelatin. When combined with gelatin, a gelling system is provided that is stable at a relatively high salt content. To enable this effect, starch is preferably present in an amount mentioned above. Gelatin is preferably present in an amount of from 0.5 wt% to 30 wt%, preferably of from 2 wt% to 20 wt%, most preferably of from 3 wt% to 15 wt%., based on the weight of the liquid phase.

A gelling system comprising starch is normally heated above the gelatinisation temperature of the starch to activate the gelling activity of the starch.

Gelling systems without starch

In another preferred aspect, the concentrate comprises a gelling system without starch. This group preferably comprises gelling systems from the group consisting of gelatin, agar- agar, pectin, glucomannan, carrageenan, galactomannan in combination with xanthan gum, glucomannan in combination with xanthan gum, glucomannan in combination with carrageenan, glucomannan in combination with agar- agar, , galactomannan in combination with carrageenan, galactomannan in combination with agar agar and mixtures thereof. An advantage of these gelling systems is that they show less turbidity after dissolving in an aqueous solution and a faster dilution time.

Preferably, a gelling system without starch and preferably without gelatin is present in a total amount of from 0.1 wt% to 20 wt%, more preferably of from 0.3 wt% to 10 wt%, most preferably of from 0.5 wt% to 5 wt%. , based on the weight of liquid phase. When the gelling system without starch is gelatin or comprises gelatin, such gelling system is preferably present in an amount of form 0.5 wt% to 30 wt%, more preferably of from 2 wt% to 20 wt, most preferably of from 3 wt% to 15 wt%, based on the weight of the liquid phase.

Gelling system comprising an interactive combination of gums

Another preferred class of gelling systems comprises an interactive combination of gums. This class of gelling systems preferably comprises, more preferably, consists of one of the group of gelling systems consisting of: galactomannan in combination with xanthan gum, glucomannan in combination with xanthan gum, galactomannan in combination with carrageenan, glucomannan in combination with carrageenan, agar-agar in combination with galactomannan and mixtures thereof.

Preferably, the gelling system comprises a combination of xanthan gum and a glucomannan or xanthan gum and a galactomannan. These combinations showed good resistance to relatively high salt content, preferably in terms of shape stability, gel strength and/or low level of syneresis. Hence, preferably for food concentrate comprising relatively high salt levels, preferably the gelling system comprises one of the group of gelling systems consisting of a combination of xanthan gum and a glucomannan, a combination of xanthan gum and a galactomannan, a combination of gelatin and starch and mixtures thereof. Preferably, the galactomannan as used in combination with xanthan gum is selected from one of the group of galactomannans consisting of: locust bean gum, carob flour, guar gum, fenugreek gum, tara gum, cassia gum, and mixtures thereof. Preferably, the galactomannan is one of locust bean gum, guar gum and mixtures thereof. Locust bean gum and guar gum might provide optimal results in terms of gel strength and reduced syneresis.

Examples of preferred glucomannans are konjac mannan and konjac flour. Konjac mannan and konjac flour showed most optimal behavior in terms of gel strength in combination in the food concentrate of the invention comprising a liquid polyol.

Preferably, xanthan gum is combined with a galactomannan or a glucomannan in a weight ratio of xanthan gum: glucomannan or xanthan gum galactomannan of between 90: 10 to 10: 90, more preferably of from 85: 15 to 15: 85, even more preferably of from 80: 20 to 20: 80, even more preferably, of from 75: 25 to 25: 75.

Preferably the ratio of xanthan gum to glucomannan or xanthan gum to galactomannan is of between 90 to 30 wt%, preferably of between 80 to 40wt% of xanthan gum on 10 to 70 wt%, preferably between 20 to 60wt% of glucomannan or galactomannan, based on the total weight of xanthan gum and glucomannan or galactomanan taken together.

Preferably, for carrageenan and agar- agar the same preferred ratio's with a galactomannan or a glucomannan may apply as for xanthan gum with a galactomannan or glucomannan.

The amount of a gelling system comprising an interactive combination of gums is preferably of from 0.1 wt% to 20 wt%, more preferably of from 0.3 to 10 wt%., most preferably of from 0.5wt% to 5 wt% based on the weight of the liquid phase

Preferably, the present invention preferably relates to a food concentrate wherein (based on the weight of the gelling system) at least 50 wt%, preferably at least 75wt%, even more preferably, at least 90wt%, even more preferably at least 95wt%, even more preferably, at least 99wt%, of the gelling system most preferably the entire gelling system, consists of at least one, preferably is one, of the group consisting of galactomannan in combination with xanthan gum, glucomannan in combination with xanthan gum, galactomannan in combination with carrageenan, glucomannan in combination with carrageenan, agar- agar in combination with galactomannan. Preferably, at least 50wt%, preferably at least 75wt%, even more preferably, at least 90wt%, even more preferably at least 95wt%, even more preferably, at least 99wt%, of the gelling system most preferably the entire gelling system, consists of at least one, preferably is one, of the group consisting of the combination of xanthan gum with locust bean gum, the combination of xanthan gum with guar gum and the combination of xanthan gum with konjac mannan.

The concentrate of the present invention is preferably a thermo-reversible gel. Such a gel can be melted when heated above its melting point and forms a gel again after cooling below the gelling point. During processing, this may prove advantageous. The gelling systems which are interactions of gums, the gelling system of gelatin combined with starch, but also other thermo-reversible gelling systems in the presence of starch, show an advantage that they are thermo-reversible gelling systems and may provide a thermo-reversible food concentrate according to the invention.

Liquid phase

The food concentrate of the present invention comprises a liquid phase. The total liquid phase of the total concentrate according to the present invention as it is in the packaging preferably is in the range of between 30 to 92 wt%, more preferably from 40wt% to 80 wt%, most preferably from 45wt% to 70 wt% (based on the weight of the total concentrate. The term "liquid phase" as used in the present application is meant to describe the sum of ingredients that are liquid at 20°C (1 Bar). The liquid phase may comprise the sum of water, liquid polyol and water which is present in ingredients of the gel such as for example vegetables, vegetable juice, vegetable concentrate, meat concentrate, liquid yeast extract and/or glucose syrup. When particulates are present in the concentrate, these particulates may contain water as well, which is considered as part of the total liquid phase. Oils are not part of the liquid phase according to the definition above.

The concentrate is in the form of a gel. The gel is preferably a water-based gel and hence preferably comprises water. When the liquid phase comprises water, water is preferably present in an amount of more than 10wt%, more preferably of more than 20wt%, most preferably of more than 25wt% and preferably less than 92 wt%, more preferably less than 80wt%, most preferably less than 65 wt% and can preferably be from 10 to 92 wt%, more preferably in an amount of from 20wt% to 80 wt%, most preferably in an amount of from 25wt% to 65 wt%, based on the weight of the total concentrate.

The water activity $a_w$ of the total concentrate as it is in the packaging is preferably higher than 0.5, more preferably more than 0.6, even more preferably more than 0.65, even more preferably more than 0.7 and preferably less than 0.98, more preferably less than 0.9, even more preferably less than 0.85, most preferably less than 0.80 and can preferably be form 0.5 to 0.98, more preferably from 0.6 to 0.9, even more preferably from 0.65 to 0.85, even more preferably from 0.65 to 0.80, most preferably from 0.70 to 0.85.

Liquid polyol

The concentrate of the present invention comprises liquid polyol. Liquid polyol forms part of the liquid phase of the food concentrate. Counter-intuitively, it was found in the present invention that the addition of liquid polyol to a gelled food concentrate provided a gel with a structure that appeared to be stronger in stead of more liquid.

As the present invention is in the field of concentrated food products, preferably, the liquid polyol is a food-grade liquid polyol. Liquid should be interpreted here as liquid at 20°C at 1 bar. "Food-grade" is intended to mean edible and safe in the concentrations as indicated by the relevant authorities, based on the diluted, ready to eat food product.

Preferably, the present invention relates to a concentrate wherein the liquid polyol is selected from the group of liquid polyols consisting of glycerol, propylene glycol, glycerol triacetate and mixtures thereof. Preferably, the present invention relates to a concentrate wherein the liquid polyol is selected from the group of liquid polyols consisting of glycerol, propylene glycol, and mixtures thereof. More preferably, the invention relates to a concentrate wherein the liquid polyol comprises glycerol, most preferably, wherein the liquid polyol is substantially glycerol.

When the liquid phase comprises liquid polyol, the liquid polyol is preferably present in an amount of from 0.1 wt% to 80 wt%, based on the total weight of the food concentrate. More preferably, the amount of liquid polyol is from 2 wt% to 75 wt% even more preferably from 5 wt% to 70wt%, even more preferably from 10 wt% to 50 wt%, most preferably from 20 wt% to 40wt%, based on the weight of the total food concentrate. Preferably, the polyol may be present in an amount of from 25 wt% to 85 wt%, more preferably of from 40 wt% to 70wt%, based on the weight of the total concentrate, for example for optimal improvement of the melting behaviour. These amounts especially apply to the situation wherein the liquid polyol comprises glycerol.

Preferably, the present invention relates to a concentrate comprising from 0.1 to 80wt% of glycerol, more preferably of from 5 wt% to 55 wt%, even more preferably of from 10 wt% to 50 wt%, most preferably of from 20 wt% to 40 wt% of glycerol, based on the weight of the total food concentrate.

In case the liquid polyol comprises propylene glycol, especially in case the liquid polyol is substantially propylene glycol, propylene glycol is preferably present in an amount of from 0.1 wt% to 60wt%, more preferably from 5 wt% to 15 wt%, most preferably from 7 wt% to 10 wt%, based on the weight of the total food concentrate.

In case the liquid polyol comprises glycerol triacetate, especially in case the liquid polyol is substantially glycerol triacetate, glycerol triacetate is preferably present in an amount of from 0.1 to 10wt%, more preferably from 1 to 8 wt%, most preferably from 2 to 5 wt%, based on the weight of the total food concentrate.

Especially preferred embodiments may be obtained when the gelling system comprises the combination of xanthan gum and a galactomannan, preferably locust bean gum, when the concentration of glycerol is preferably of from 20wt% to 50wt%, preferably combined with a salt content of from 5 wt% to 12wt%, preferably 5wt% to 10 wt%, both based on the weight of the concentrate. When the polyol is propylene glycol, the optimal effect is reached for a preferred concentration of propylene glycol of between 20 wt% to 65wt%, preferably combined with a salt content of preferably 3 wt% to 10 wt%, preferably 5 wt% to 8 wt%, both based on the weight of the total concentrate. In this preferred situation, the higher salt contents are preferably to be combined with the lower polyol contents and lower salt contents with higher liquid polyol contents.

Preferably the invention relates to a concentrate of the present invention, wherein the gelling system comprises a combination of xanthan gum and a galactomannan, the liquid polyol is glycerol in an amount of from 20wt% to 50wt% and the salt is present in an amount of from 5 to 12 wt%, based on the weight of the total food concentrate.

Preferably the invention relates to a concentrate of the present invention, wherein the gelling system comprises a combination of xanthan gum and a galactomannan, the liquid polyol is propylene glycol in an amount of from 20wt% to 65wt% and the salt is present in an amount of from 3 to 10 wt%, based on the weight of the total food concentrate.

Salt

The food concentrate according to the present invention preferably comprises salt. Salt preferably comprises common salt also referred to as table salt and NaCl. In addition, part of the salt may comprise KCl. Salt is preferably NaCl. Salt is present in an amount of higher than 3wt%, preferably higher than 5 wt%, more preferably higher than 10 wt%, and lower than 30 wt%, preferably lower than 25 wt%, more preferably lower than 20wt%, based on the weight of the total food concentrate. It can for example be from 3 wt% to 30 wt%, more preferably from 5 wt% to 25 wt%, even more preferably from 10 wt% to 20 wt%, or from preferably from 12 wt% to 30 wt%, even more preferably from 15 wt% wt% to 25 wt%, most preferably form 15 wt% to 20wt%, based on the weight of the total food concentrate.

Sugar

The food concentrate according to the invention is a savoury food concentrate. As described above, "savoury" is preferably defined as not tasting sweet when it is in the resulting end product which is intended to be consumed. The ready to eat product resulting from this concentrate according to the invention is preferably non-sweet In order to contribute to a taste profile which is considered as not tasting sweet, preferably the sugar content is relatively low. Sugar can preferably be considered here as at least one of the group consisting of sucrose, lactose, saccharose, glucose, fructose, and mixtures thereof. Preferably, the present invention relates to a concentrate, wherein the concentration of sugar is less than 10 wt%, preferably less than 7wt%, preferably of between 0wt% and 10 wt%, more preferably of between 0.2wt% and 5wt%, even more preferably of between 1wt% and 3 wt%, based on the weight of the total food concentrate. In case the concentrate comprises glucose syrup, the glucose syrup is preferably present in an amount of lower than 35 wt%, preferably lower than 25 wt%, more preferably lower than 20, most preferably lower than 15 wt%, based on the weight of the total food concentrate.

Filler

A filler may preferably be present in an amount of lower than 60wt%, more preferably lower than 40wt%, even more preferably lower than 30wt%, most preferably lower than 10wt%, and can be for example from 0 wt% to 30wt%, or from 1 to 10 wt%, all wt% based on the weight of the total food concentrate. A filler may be a material selected from the group of fillers consisting of maltodextrin, glucose syrup and fillers based on carbohydrates and mixtures thereof.

The concentrate may further comprise colourants and preservatives.

Savoury taste enhancer

To contribute to the savoury character, the food concentrate of the present invention may further comprise a savoury taste enhancer selected from the group consisting of monosodium glutamate (MSG), 5'-ribonucleotides, yeast extract, hydrolyzed proteins of vegetables-, soy-, fish, or meat origin, organic acids and mixtures thereof. Savoury taste enhancers are preferably present in an amount of less than 30 wt%, more preferably of between 0.1 wt% and 30 wt%, preferably in an amount of from 1wt% to 25 wt%, most preferably in an amount of from 5wt% to 15 wt%, based on the weight of the total food concentrate.

Taste imparting components

In the concentrates according to the invention, it is preferred that taste-imparting components are present. They may comprise one or more of liquid or dissolvable extracts or concentrates selected from the group consisting of meat, fish, crustaceans, herbs, fruit, vegetable, particles of meat, particles of fish, particles of crustaceans, particles of herbs, particles of vegetable, particles of fruit, flavours and mixtures thereof. Probably due to the wet nature of the concentrates according to the invention, such taste-imparting components can be in a not completely dried state, yet the concentrate still allows unit dosing. Generally speaking such "wet" taste imparting components preferably will have a higher quality or higher quality image. Also wet components may be included which may not (solely) contribute to taste, but which may be there for visual reasons. Such can e.g. be pieces of certain vegetables. Such may be present in the same amount as the taste-imparting components. In the above, where it says "meat" this is preferably to be understood to comprise beef, pork, chicken (and other fowl). Preferably the amount of taste-imparting components as set out above is from 1wt% to 70wt% (by weight on the total concentrate). More preferred from 2wt% to 60wt%, even more preferably from 5wt% to 40%. The taste-imparting components can be in a not completely dry state (i.e. partially wet), or be completely wet, but also frozen or dry taste-imparting ingredients may be used herein. Preferably, the size (measured along the longest axis) of the particles is from 0,3 to 20 mm, more preferably, of from 0,5 to 10 mm, most preferably, of from 1 to 10 mm.. It may be preferred that the amount of protein-containing particles is relatively low, as a high amount of protein may result in a gel that is too rigid or even brittle. Hence the amount of protein particles, like e.g. meat, is preferably less than 20 wt%, preferably of between 0 and 20 wt%, including the absence of any particles, more preferably more than 0.5 wt% and less than 10 wt%, most preferably more than 1 wt% and less than 5% by weight of the total concentrate. It may be preferred that protein particles are substantially absent.

pH

The pH of the total concentrate according to the invention is preferably between 3 and 8, more preferably between 4 and 7. The pH can be measured after e.g. finely grinding the whole concentrate, or PH measurement can preferably be done directly in the gel e.g. by using a ring gap electrode.

Fat

Fat may be present in the food concentrate according to the present invention in relatively low amounts. Fat can be liquid fat or solid fat, at ambient temperature, such as for example at 20°C. Preferably, a fat is one of the fats selected from the group consisting of chicken fat, pork fat, beef fat, and mixtures thereof. It can preferably be a fat selected from the group consisting of palm oil, sunflower oil, olive oil, rape seed oil and mixtures thereof. It can be a vegetable fat or an animal fat. Higher amounts are preferably prevented as they may interfere with the proper texture of the gel or may result in phase separation during storage or transport. Relatively high amounts of hard fat, such as e.g. saturated or hydrogenated fats may contribute to a texture that is more rubbery than jelly, and therefore are not preferred. Relatively high amounts of liquid fat, such as for example oils which are liquid at room temperature, may have a weakening effect on the texture of the gel. Hence, preferably, the present invention relates to a food concentrate further comprising less than 30 wt% of fat, preferably less than 20 wt% of fat, more preferably less than 15 wt%, more preferably of less than 10 wt% of fat. In another preferred aspect, fat may be present in an amount of from 0.5 to 30 wt% of fat, more preferably of from 1 to 15wt% of fat, most preferably of from 3 to 10 wt% of fat, based on the weight of the food concentrate. The amount of fat in the food concentrate is preferably as low as possible, for optimal stability. Preferably fat is substantially absent.

Shape

The food concentrate in the form of a gel preferably has the form suitable and/or convenient to be used as a cooking aid. It is therefore preferably a thermo-reversible gel. As a cooking aid, it qualifies well as a unit-dose shape. Consequently, a preferred shape may be a shape selected from the group consisting of a cube, a tablet, a brick-shape, a pellet, a ball, a sphere, a briquette, a dragee, a pillow-shape, an egg-shape, a heart shape, a cone, and a flattened egg-shape. The weight of these unit-dose concentrates is preferably from 1 to 300 g, preferably from 5 to 100 g, more preferably from 10 to 50g, most preferably from 15 to 40 g.

The shape of the concentrate of the present invention is however not limited to these unit dose sizes. It may be preferred that the concentrate is provided in bulk size, suitable for restaurant applications. The concentrate can be used in one use, or several parts can be taken from the concentrates in an amount required at the time of use. The concentrate there may have a weight of from 1 g to 10 kg, preferably of from 30g to 1 kg, more preferably of from 50g to 800g, even more preferably of from 50g to 500g, most preferably of from 100g to 250g.

The weights of the concentrate and its ingredients should be interpreted as the weight in the absence of the packaging.

Packaging

The food concentrate according to the invention is preferably a packaged food concentrate. The packaging provides protection during production and transportation. It further may shape the product when the liquid material is poured in the packaging before solidifying. The packaging of the concentrate according to the invention preferably comprises, preferably is one of the group of packaging consisting of a blister pack, a jar, a bucket, a pouch, a tub, a cup, a foil, a stick-pack, and a sachet. Preferably, the packaging is one of the group of a plastic tub, a plastic cup and a stick-pack. The tub or cup preferably has been sealed with a foil. Preferably, the packaging is a reclosable packaging. Preferably, the packaging is a packaging that allows removal of the concentrate in an intact way without the need for substantially damaging the shape or integrity of the concentrate.

Process

In a further aspect, the present invention relates to a process to produce a concentrate according to the present invention. In a first step, a) a solution is provided comprising salt, a liquid polyol, and the gelling system. In step b), the solution resulting from step a) is transferred to a packaging. In a step c) of the process the packaging containing the product is closed.

Preferably, the solution of step a) is provided by mixing the salt, gelling agents of the gelling system and optional other ingredients into the liquid polyol and optional water. The total water content is preferably higher than 10 wt%, preferably higher than 20 wt%, more preferably higher than 25 wt% and preferably lower than 92wt%, more preferably lower than 80 wt%, most preferably lower than 65wt%. Mixing can be done by a conventional mixer, such as high shear or low shear mixes dependent on gelling system requirement and further aspects of the recipe (e.g. emulsification of fat or cutting of vegetables) , as known to the skilled person.

Preferably a heating step is applied prior to, during or after transfer into the packaging, for preservation purposes and/or to facilitate dissolution of ingredients and/or achieving gelation (upon cooling thereafter) of thermoset gels. Alternatively, the (heated) mixture may be poured in moulds, and cooled to set. A cooling step may be present, to fasten the solidification process. Cooling may be done by e.g. air cooling or liquid cooling.

After setting to a gel, the gelled concentrate will have to be removed from the moulds and packaged. It is preferred, however, to manufacture directly into the packaging. The packaging is then closed by for example a seal, a film or a lid.

Heating allows the gelling system to dissolve in the liquid fraction. The time and temperature of the heating depends on the gelling system that is used. Heating in step a) is preferably conducted at a temperature of from 20°C to 130°C, more preferably of from 40°C to 100°C, even more preferably of from 60°C to 95°C, most preferably of from 75°C to 90°C.

In case the gelling system predominantly comprises a galactomannan or glucomannan in combination with xanthan, a temperature of heating is preferred of between 70°C to 100°C, more preferably of between 80°C to 90°C. In case the gelling system predominantly comprises starch native, the heating temperature preferably is between 55°C and 100°C, more preferably of between 60°C and 95°C. In case the gelling system predominantly comprises starch modified, the preferred heating temperature is from 20°C to 130°C. In case the gelling system predominantly comprises gelatin, the preferred heating temperature is between 20°C and 70°C, more preferably of between 30°C and 60°C. In case the gelling system predominantly comprises agar a heating temperature is preferred of between 50°C and 100°C, more preferably of between 60°C and 90°C. In case the gelling system predominantly comprises carrageenan, the preferred heating temperature is between 75°C and 110°C.

The timing of the heating step is dependent on the aimed pasteurization effect, dissolving time of dry ingredients and maybe necessary moistening time for dry ingredients. The heating time must be also sufficient to activate the gum system, which is also dependent on the heating temperature.

Use

In a further aspect, the present invention relates to the use of the concentrate according to the present invention to prepare a bouillon or a soup. The product of the present invention may further be used to prepare a sauce or a gravy or can be used as a seasoning. The product of the present invention to this end is preferably added to a liquid and at least partly dissolved in it. The liquid is preferably an aqueous solution such as water. The concentrate of the invention may also be added to a dish, wherein it can be dissolved.

The invention preferably relates further to a ready to eat food composition comprising at least part of a food concentrate according to the invention, preferably in a dissolved form. Preferably the food concentrate is diluted, preferably in an aqueous solution or a dish. Preferred dilution factors for the food concentrate of the present invention for example for bouillon and seasoning applications are preferably in a range of from 1:1 to 1:50, more preferably from 1:5 to 1:45, even more preferably from 1:10 to 1:40, most preferably from 1:15 to 1:35. Preferred dilution factors, preferably for soup and sauce applications, are from 1:1 to 1:40, preferably from 1:2 to 1:35, more preferably from 1:5 to 1:30.

In a further aspect, the present invention relates to the use of a liquid polyol to reduce re-jellification of a liquid ready-to-eat food product obtained by dissolving a food concentrate in the form of a gel in an aqueous liquid. The liquid ready-to-eat food product may comprise a food concentrate in the form of a gel in dissolved form. The liquid ready-to-eat food product may be derived from a food concentrate in the form of a gel, e.g. by diluting the concentrate in hot water. In other cases, a food concentrate in the form of a gel may be added to an aqueous liquid and diluted in it, for example, in a soup or a sauce. Preferably, the present invention relates to the use of a liquid polyol selected from the group consisting of glycerol, propylene glycol, glycerol triacetate and mixtures thereof to reduce re-jellification in a liquid ready-to-eat food product derived from a food concentrate in the form of a gel or comprising a food concentrate in the form of a gel in dissolved form.

The present invention therefore further refers to a method to reduce re-jellification of a liquid ready-to-eat food product, comprising the step of:

a) adding a liquid polyol to a food concentrate in the form of a gel during the production process of the food concentrate,
b) preparing the liquid ready to eat food product from said food concentrate.

Benefits

It was found in the present invention that the addition of liquid polyol to a gelled food concentrate provides a reduction of re-jellification in the ready-to-eat food product obtained by dissolving the concentrate in a liquid. Reduction of re-jellification can not be reached by just lowering the concentration of the gelling system, as this might result in a severe or even unacceptable lowering of the gel strength.

The results further show that addition of a liquid polyol furthermore may provide an improved melting time when the food concentrate was added to the cooking pot. Improved melting behavior includes less sizzling and sputtering in the cooking pot.

An unexpected further advantage observed in the present invention was that addition of a liquid polyol provided a system with increased flexibility to modulate the gelling point of the food concentrate. Increasing the levels of polyol to 20wt% by replacing part of the water with polyol while keeping the salt level constant generally increased the gelling point in a gel based on xanthan gum and locust bean gum, while increasing the level of salt from 0 to 10 wt% salt while keeping the polyol at 20wt% decreases the gelling point. The concentrates are usually prepared at 80 degrees C or higher whereby the concentrate is liquid. This enables filling but after filling the packaging can only be moved after the concentrate has gelled. A higher gelling point means that the concentrates gel at a higher temperature e g at 66 degrees C instead of 55 degrees C. Thus, the advantage of a higher gelling point is that the product can be moved sooner. In fact, since cooling the product from say 80 degrees C to the gelling temperature is carried out by active cooling equipment, the higher gelling point means a significant cost reduction. A higher gelling point is also advantageous in tropical regions where storage temperatures may be so high that active cooling is needed to prevent gels with low gelling points from melting during storage.

The present invention is now illustrated by the following, not limiting examples.

**Example 1: Concentrated Bouillon compositions in the form of shape-stable gels with Xanthan-LBG (gelling system) and Glycerol (polyol).**

| Ingredients | [weight %] |
|---|---|
| Added water | 50.9 |
| **Glycerol** | **12.7** |
| Added salt (NaCl) | 21.6 |
| **Xanthan gum*** | **0.58** |
| **Locust Bean Gum*** | **0.25** |
| Sugar | 3 |
| Savoury taste enhancer | 5 |
| Taste imparting components incl. particles | 5.7 |
| Colorants | 0.3 |
| | |
| *TOTAL* | *100* |
| | |
| Water activity | 0.71 |
| *gelling system | |

The compositions were prepared using an (automated) IKA lab reactor (batch size: 2kg). The liquid ingredients (water and polyol) were heated until 75°C, then the remaining ingredients (except for the vegetables) were added followed by mixing at high-shear for 3 min. Subsequently, the mixture was heated to 85°C, and vegetables were added to the mixture. This mixture was then homogenized at 85°C for 3 min using high-shear, followed by pasteurization (3 min at 85°C). Then the savoury  concentrate was packed by filling pots and tubs with the concentrate followed by sealing the pots and tubs.

Water activities (aw) were measured using the Aqualab (Water activity Meter, series 3TE, IUL Instruments). Because water activity is temperature dependent, samples were kept at 25°C over night before measuring.

**Example 2: Concentrated Bouillon compositions in the form of shape stable gels with Agar (gelling system) and Propylene glycol (polyol)**

| Ingredients | Recipe 2A [weight %] | Recipe 2B [weight %] |
|---|---|---|
| Water | 73.8 | 43.6 |
| **Propylene glycol** | **0.0** | **30.3** |
| Salt (NaCl) | 9.2 | 9.2 |
| **Agar*** | **1** | **1** |
| Sugar | **3** | **3** |
| Savoury taste enhancer | 6 | 5.6 |
| Taste imparting components incl. particles | 7 | 7 |
| Colorants | 0.3 | 0.3 |
| | | |
| Total | 100 | 100 |
| Melting Time | 3 min 30 s | 1 min 30 s |
| *gelling system | | |

Preparation: The recipes were prepared as in Example 1 except that it was not pasteurized for 3 min at 85°C. Instead the concentrate was heated for 2 min at 100°C.

Melting time was measured by visual observation. For each sample, one jelly was melted into a pan with a surface temperature of 150°C. During melting pictures were taken regularly in order to compare samples and the time for the jelly to complete melt was timed. The time for the jelly to melt is shown in the table.

Results: Bouillon jellies with propylene glycol (Example 2B) showed a better melting behavior e.g. in terms of lower melting time and less splatter and sizzling compared to the control samples without propylene glycol (Example 2A).

Examples 3 to 9.- Various savoury concentrates in the form of shape stable gels. Addition of taste imparting ingredients did not influence the relative effects of polyols as observed in the present invention.

**Example 3: Xanthan-LBG model savoury gels with Glycerol and Salt**

| Example 3 | | A | B | C |
|---|---|---|---|---|
| **Glycerol** | **g** | **20** | **20** | **20** |
| NaCl | g | 5 | 10 | 15 |
| Water | g | 75 | 70 | 65 |
| **Xanthan*** | **g** | **0.80** | **0.76** | **0.71** |
| **LBG*** | **g** | **0.34** | **0.32** | **0.31** |
| TOTAL | g | 101.14 | 101.08 | 101.02 |
| *gelling system | | | | |

The gels of Example 3 were prepared by adding water and polyol into a glass jar and mixing on a common laboratory scale hot plate with magnetic stirring. The salt (NaCl) was added and the mixture was stirred and heated to 80-90°C. The dry gelling system ingredients (Xanthan and LBG) were then added to the mixing vessel. The mixture was stirred at 80-90°C and kept at this temperature for approximately 30 min or until the gelling system was dissolved (no lumps present). The whole process above mentioned was performed keeping the glass jar closed to avoid water to evaporate during jelly preparation. The mixture was filled into containers or moulds and kept closed for cooling at room temperature.

**Example 4: Xanthan-LBG model savoury gels with Propylene glycol and Salt**

| Example 4 | | A | B |
|---|---|---|---|
| **Propylene Glycol** | **g** | **20** | **20** |
| NaCl | g | 5 | 10 |
| Water | g | 75 | 70 |
| **Xanthan*** | **g** | **0.80** | **0.76** |
| **LBG*** | **g** | **0.34** | **0.32** |
| TOTAL | g | 101.14 | 101.08 |
| *gelling system | | | |

The gels of Example 4 were prepared as described in Example 3.

**Example 5: Model savoury gels with different gelling systems, Glycerol and Salt**

| Example 5A | | |
|---|---|---|
| **Glycerol** | **g** | **40** |
| NaCl | g | 20 |
| Water | g | 140 |
| **Agar*** | **g** | **2.16** |
| Total | | 202.16 |

(continued)

| Example 5A | | |
|---|---|---|
| | | |
| Example 5B | | |
| **Glycerol** | **g** | **40** |
| NaCl | g | 20 |
| Water | g | 140 |
| **Xanthan*** | **g** | **1.08** |
| **Konjac Flour*** | **g** | **1.08** |
| Total | | 202.16 |
| *Gelling system | | |

The gel of Example 5 was prepared as described in Example 3.

**Example 6: Model savoury gels with Gelatin-Starch combination as gelling system and glycerol as polyol.**

| Example 6 | | |
|---|---|---|
| Glycerol | g | 40 |
| NaCl | g | 20 |
| Water | g | 140 |
| **Native corn starch*** | **g** | **3.6** |
| **Gelatin (Pigskin Bloom 250)*** | **g** | **14.4** |
| Total | | 218.0 |
| *Gelling system | | |

The gel of Example 6 was prepared by adding water and glycerol (to a glass jar and mixing in a common laboratory scale hot plate with magnetic stirring. The dry gelling system ingredients (Native corn starch and Gelatin) were then added to the mixing vessel. The mixture was heated to 60-65°C and kept at this temperature for approximately 5 min. The mixture was then heated to 90-95°C and kept at this temperature for at least 10 min (in order to gelatinise the starch). The salt (NaCl) was  added and the mixture was stirred and kept at 90-95°C for at least 5 min or until NaCl was dissolved. The whole process above mentioned was performed keeping the mixture glass vessel closed so water would not evaporate during the jelly preparation. The mixture was filled into containers and kept closed for cooling at room temperature.

**Example 7: Gels with glycerol -glycerol triacetate polyol mixture and Xanthan-LBG gelling system.**

| Example 7 | | |
|---|---|---|
| **Glycerol** | **g** | **16** |
| **Glycerol triacetate** | **g** | **4** |
| NaCl | g | 5 |
| Water | g | 75 |
| **Xanthan*** | **g** | **0.80** |
| **LBG*** | **g** | **0.34** |

(continued)

| Example 7 | |
|---|---|
| Total | 101.14 |
| *Gelling system | |

The gel of Example 7 was prepared as described in Example 3.

**Example 8: Gels with Agar and Glycerol or Propylene glycol**

*Compositions with Glycerol*

| | | Control: NO POLYOL | | |
|---|---|---|---|---|
| | | 8A | 8B | 8C |
| **Glycerol** | **g** | **0** | **20** | **40** |
| NaCl | g | 20 | 20 | 40 |
| Water | g | 180 | 140 | 120 |
| **Agar*** | **g** | **2.16** | **2.16** | **2.16** |
| Total | | 202.16 | 202.16 | 202.16 |
| Syneresis | % | 3.2 | 0.4 | 1.0 |
| *Gelling system | | | | |

*Compositions with Propylene glycol*

| | | Control: NO POLYOL | | |
|---|---|---|---|---|
| | | 8D | 8E | 8F |
| **Propylene glycol** | **g** | **0** | **20** | **40** |
| NaCl | g | 20 | 20 | 40 |
| Water | g | 180 | 140 | 120 |
| **Agar*** | **g** | **2.16** | **2.16** | **2.16** |
| Total | | 202.16 | 202.16 | 202.16 |
| Syneresis | % | 3.2 | 1.3 | 0.6 |
| *Gelling system | | | | |

The gels on Example 8 were prepared as described for Example 3.
Syneresis was measured in the following way: Approximately 30 g of the hot gel composition, as described above, was added to a plastic cup (in duplicate) and closed with a plastic lid (screw plastic lids). After at least 12 h and no longer than 24 h of maturation time the gel in the cup was cut in half with a sharp knife and one of the halves was transferred to another cup of the same type. Both halves in the plastic tubs with screw lids were kept for a week at ambient to release syneresis. Released syneresis (liquid expelled) was collected by pipette and weighed (Ws). Remained gel was weighed (Wg). The syneresis amount was calculated as following equation,

$$Syneresis (\%) = 100 \times Ws/(Ws+Wg)$$

In the present study, above calculation was done by using total syneresis and total remaining gel amounts. At least two cups for each jelly were used resulting in a total of 4 individual measurements (4 halves). The average of the total amount of water expelled by the 4 samples per total amount of gel in the 4 samples is presented.

A benefit that was observed was a reduction in syneresis when glycerol (8B and 8C) or propylene glycol (8E and 8F) were added compared the control sample with no polyol (8A and 8D).

**Example 9: Model savoury gels with Native Corn Starch and Glycerol**

| | | |
|---|---|---|
| **Glycerol** | **g** | **40** |
| NaCl | g | 20 |
| Water | g | 140 |
| **Native corn starch*** | **g** | **18** |
| Total | | 218 |
| *Gelling system* | | |

The gel of Example 9 was prepared as in Example 6.

**Example 10: re-jellification reduction**

Samples were made comprising different gelling systems (xanthan gum combined with locust bean gum and xanthan gum combined with konjac mannan) in an amount to provide comparable gel strength in recipes 1-4 and 5-8 respectively. To measure for re-jellification, the viscosity was analysed after 5 times and 10 times dissolution.

The following recipes (1-4) were prepared, according to the process steps as

| Ingredients (wt%) | Recipe 1 | Recipe 2 | Recipe 3 | Recipe 4 |
|---|---|---|---|---|
| Added Water | 63.7 | 61.8 | 55.2 | 44.7 |
| **Glycerol** | 0.0 | 3.3 | 14.2 | 31.0 |
| Added Salt (NaCl) | 21.6 | 20.0 | 14.8 | 7.3 |
| Xanthan gum | 0.58 | 0.52 | 0.48 | 0.37 |
| Locust Bean Gum | 0.25 | 0.22 | 0.2 | 0.16 |
| Sugar | 3.4 | 3.5 | 3.7 | 4.1 |
| Vegetables (90,6 % moisture) | 2.8 | 2.9 | 3.1 | 3.3 |
| Garlic paste (37 % moisture, 50 % salt) | 1.0 | 1.0 | 1.0 | 1.1 |
| Savoury taste enhancer (25 % salt) | 2.2 | 2.2 | 2.4 | 2.6 |
| Taste imparting components incl. particles (21 % salt) | 4.2 | 4.3 | 4.6 | 5.0 |
| Colourants | 0.3 | 0.3 | 0.3 | 0.3 |
| *TOTAL* | *100* | *100* | *100* | *100* |

described in Example 1.

The following additional recipes (5-8) were prepared:

| Ingredients (wt%) | Recipe 5 | Recipe 6 | Recipe 7 | Recipe 8 |
|---|---|---|---|---|
| Added Water | 74.3 | 70.5 | 59.4 | 44.6 |
| Glycerol | 0.0 | 3.7 | 14.9 | 29.7 |
| Added Salt (NaCl) | 10.5 | 10.5 | 10.5 | 10.5 |
| Xanthan gum | 0.62 | 0.62 | 0.57 | 0.52 |
| Konjac Mannan | 0.27 | 0.27 | 0.25 | 0.22 |

(continued)

| Ingredients (wt%) | Recipe 5 | Recipe 6 | Recipe 7 | Recipe 8 |
|---|---|---|---|---|
| Sugar | 4.0 | 4.0 | 4.0 | 4.0 |
| Vegetables (90 % moisture) | 3.3 | 3.3 | 3.3 | 3.3 |
| Garlic paste (37 % moisture, 50 % salt) | 1.1 | 1.1 | 1.1 | 1.1 |
| Savoury taste enhancer (11,6 % salt) | 2.5 | 2.5 | 2.5 | 2.5 |
| Taste imparting components (29,1 % salt) | 3.1 | 3.1 | 3.1 | 3.1 |
| Colourants | 0,3 | 0,3 | 0.3 | 0.3 |
| *TOTAL* | *100* | *100* | *100* | *100* |

The Chicken Bouillon recipes 5-8 were all processed on pilot plant scale using an Unimix LM6 with the following process (batch size: 3,5 kg):

a. Mix liquid and paste components (water, glycerol, garlic paste) and add the mixture to Unimix mixing apparatus;

b. Stir and heat to 75°C;

c. Add dry ingredients (salt, xanthan gum, konjac mannan, sugar, savoury taste enhancer, taste imparting components)(mixed with a whisk before adding) into the mixing vessel while applying vacuum -300 mbar (to suck in the dry ingredients), stirring and homogenizing (5000 rpm) to allow dilution of the whole powder mix into water;

d. Stir and keep vacuum around 4 min;

e. Heat up to 85°C and add vegetables (through opening on the top) while stirring and homogenizing (5000 rpm);

f. Heat up to 85°C again and keep at 85°C for 4 min while stirring and homogenizing (5000rpm), to pasteurize product and to cut vegetables

g. Hot filling into containers, followed by sealing and leaving to cool to room temperature.

Stirring was used during the whole process at 150 rpm.

Gel strength (given in g) was measured as follows. After production of each batch, 3 standard plastic pots for this measurement (diameter 50mm, height 72mm) were filled and kept overnight (at least 12 hrs) for maturation at ambient temperature. Then 3 measurements were carried out using a TAX-T2 Texture Analyser (Stable Micro Systems, Surrey, UK) with a 2 kg load cell. The gel strength was assessed by penetration of a cylinder-shaped tool (diameter: 1 cm) at a speed of 0.5 mm/s.

The samples were diluted in a rapid visco analyser beaker, water was added to the sample up to a total weight of 30 g. Samples where diluted in water at a temperature of 99°C within 3 minutes, while stirring. The samples were compared at a 5 times dilution and at a 10 times dilution. As a measure for re- jellification, the viscosity (Pa.s) of the solutions was used. The solutions were transferred into a MCR300 rheometer at 85°C equipped with a profiled cylinder and bob. The shear rate was set to 30/s throughout the experiment. The temperature was kept at 75°C for 2 minutes, the solution was cooled to 20°C at 2°C/min. and kept for 2 minutes at 20°C. Then the viscosity was read at 20°C, values were averaged over two replicates and expressed as the percentage decrease in viscosity: 100% x (1- (viscosity sample with liquid polyol / viscosity sample without liquid polyol) ) .

Results:

Recipes 2 to 4, according to the invention showed a decrease in re-gellification viscosity compared to recipe 1 (no liquid polyol). The percentage decrease amounted up to 30%. This effect was visible both at 5 and 10 times dilution. Recipes 6 to 8 showed a percentage decrease in viscosity at 5 and 10 times dilution, compared to recipe 5 (no liquid polyol). The percentage viscosity decrease reached 47% in example 8 at a ten times dilution.

Example 10 indicates that for samples of concentrated food concentrates with a comparable gel strength, the re-jellification after dissolution is reduced with increased levels of liquid polyol.

**Example 11: melting behavior**

In Example 11 the effect of liquid polyol on the melting behavior of the food concentrates in the form of a gel when heated in a cooking pot was examined. Melting behavior of the samples prepared according to recipes 5 to 8 of Example 10 were compared using a visual evaluation: for each sample, one concentrate in the form of a gel (~28 g) was melted into a pan with a surface temperature of about 150°C containing 1 g of vegetable oil. A stainless steal ring (diameter 10 cm) was placed in the middle of the pan which kept the oil and the gel in a controlled position. The melting behavior was evaluated by a panel of four people, scoring the intensity of splattering and the bubble size during melting. The different samples were melted and compared to a video of the reference sample (0% Glycerol, 0.89 % gums). The panel members compared the melting behavior (splattering and bubble formation) of the samples according to recipes 6-8 to the reference containing 0% glycerol (recipe 5). The samples were graded in classes of melting behaviors showing increasing difference with the reference.

From the test it was concluded that an increase of the glycerol level in the composition lead to an improved melting behavior in terms of less intense splattering and less intense bubble formation and a more smooth melting behavior in the cooking pot.

**Melting behavior in the absence of added fat/oil**

The experiment was repeated as above with the exception that no oil/fat was added to the cooking pot. It was observed that the improved melting behavior is even more outspoken when no additional fat/oil is added in the cooking pot. The concentrate of the present invention allows reduction of added fat/oil during cooking and improves the use of a food concentrate in the form of a gel for a cooking process wherein it is desired to add the concentrate directly to the pan (e.g. stir fry applications).

**Claims**

1. A packaged savoury food concentrate in the form of a gel, for preparing a bouillon, a soup, a sauce, a gravy or for use as a seasoning comprising:

   - a gelling system,
   - a liquid phase comprising a liquid polyol,
   - from 3%wt to 30%wt of salt, based on the weight of the total food concentrate,

   wherein the liquid polyol is present in an amount of from 0.1 wt% to 80 wt%, based on the total weight of the food concentrate, wherein the liquid polyol is selected from the group of liquid polyols consisting of glycerol, propylene glycol, glycerol triacetate and mixtures thereof.

2. Concentrate according to claim 1, wherein the gelling system comprises one of the group of gelling systems consisting of, gelatin, starch, modified starch, agar-agar, pectin, glucomannan, carrageenan, galactomannan in combination with xanthan gum, glucomannan in combination with xanthan gum, glucomannan in combination with carrageenan, glucomannan in combination with agar-agar, gum , galactomannan in combination with carrageenan, galactomannan in combination with agar agar, and mixtures thereof.

3. Concentrate according to claim 2, wherein at least 50 wt% of the gelling system consists of a gelling system according to claim 2.

4. Concentrate according to any of the preceding claims, wherein the liquid polyol is glycerol.

5. Concentrate according to any of the preceding claims, wherein the gelling system comprises a combination of xanthan gum and a galactomannan, the liquid polyol is glycerol in an amount of from 20wt% to 50wt% and the salt is present in an amount of from 5 to 12 wt%, based on the weight of the total food concentrate.

6. Concentrate according to any of the claims 1 to 4, wherein the gelling system comprises a combination of xanthan gum and a galactomannan, the liquid polyol is propylene glycol in an amount of from 20wt% to 65wt% and the salt is present in an amount of from 3 to 10 wt%, based on the weight of the total food concentrate.

7. Concentrate according to any of the preceding claims, wherein the concentrate has a G' of between 30 and 50000 Pa.

8. Concentrate according to any of the preceding claims, wherein the ratio of the elastic modulus G' to the viscous modulus G" is higher than 1 and lower than 1000.

9. Concentrate according to any of the preceding claims, wherein the fat content is lower than 30 wt%, based on the total weight of the concentrate.

10. Concentrate according to any one of the preceding claims, wherein the concentrate in the form of a gel has a limiting strain for linear viscoelastic behavior ($\gamma_l$) of at least 10%.

11. A process to prepare a packaged savoury food concentrate in the form of a gel, for preparing a bouillon, a soup, sauce, gravy or for use as a seasoning, comprising the steps of:

    a) providing a solution comprising:

        - a gelling system,
        - a liquid polyol, wherein the liquid polyol is present in an amount of from 0.1 wt% to 80 wt%, based on the total weight of the food concentrate, wherein the liquid polyol is selected from the group of liquid polyols consisting of glycerol, propylene glycol, glycerol triacetate and mixtures thereof,
        - from 3%wt to 30%wt of salt, based on the weight of the total food concentrate,

    b) transferring the solution resulting from step a) to a packaging,
    c) closing the packaging of step b) to obtain a packaged savoury food concentrate in the form of a gel, for preparing a bouillon, a soup, sauce, gravy or for use as a seasoning.

12. Process according to claim 11, wherein the solution in step a) is heated to a temperature of between 20°C and 130°C.

13. Use of the concentrate according to any one of claims 1 to 10 to prepare a bouillon, soup, sauce, gravy or for use as a seasoning.

14. Use of a liquid polyol to reduce re-jellification of a liquid ready-to-eat food product obtained by dissolving a food concentrate in the form of a gel in an aqueous liquid .

**Patentansprüche**

1. Abgepacktes wohlschmeckendes Nahrungsmittelkonzentrat in Form eines Gels für die Herstellung einer Bouillon, einer Suppe, einer Soße, einer Bratensoße oder für die Verwendung als Würze,
das Folgendes aufweist:

        - ein gelbildendes System,
        - eine flüssige Phase, die ein flüssiges Polyol aufweist,
        - 3 bis 30 Gew.-% Salz, und zwar auf das Gewicht des gesamten Nahrungsmittelkonzentrats bezogen,

    wobei das flüssige Polyol in einer Menge von 0,1 bis 80 Gew.-% vorliegt, und zwar auf das Gesamtgewicht des Nahrungsmittelkonzentrats bezogen, wobei das flüssige Polyol aus der Gruppe von flüssigen Polyolen ausgewählt ist, die aus Glycerol, Propylenglycol, Glyceroltriacetat und Gemischen davon besteht.

2. Konzentrat nach Anspruch 1,
wobei das gelbildende System eines aus der Gruppe von gelbildenden Systemen aufweist, bestehend aus: Gelatine, Stärke, modifizierter Stärke, Agar-Agar, Pectin, Glucomannan, Carrageen, Galactomannan in Kombination mit Xanthangummi, Glucomannan in Kombination mit Xanthangummi, Glucomannan in Kombination mit Carrageen, Glucomannan in Kombination mit Agar-Agar, Gummi, Galactomannan in Kombination mit Carrageen, Galcatomannan in Kombination mit Agar-Agar und Gemischen davon.

3. Konzentrat nach Anspruch 2,
wobei mindestens 50 Gew.-% des gelbildenden Systems aus einem gelbildenden System gemäß Anspruch 2 bestehen.

4. Konzentrat nach einem der vorstehenden Ansprüche,
wobei das flüssige Polyol Glycerol ist.

5. Konzentrat nach einem der vorstehenden Ansprüche,
wobei das gelbildende System eine Kombination von Xanthangummi und einem Galactomannan aufweist, das flüssige Polyol Glycerol in einer Menge von 20 bis 50 Gew.-% ist und das Salz in einer Menge von 5 bis 12 Gew.-% vorliegt, und zwar auf das Gewicht des gesamten Nahrungsmittelkonzentrats bezogen.

6. Konzentrat nach einem Ansprüche 1 bis 4,
wobei das gelbildende System eine Kombination von Xanthangummi und einem Galactomannan aufweist, das flüssige Polyol Propylenglycol in einer Menge von 20 bis 65 Gew.-% ist und das Salz in einer Menge von 3 bis 10 Gew.-% vorliegt, und zwar auf das Gewicht des gesamten Nahrungsmittelkonzentrats bezogen.

7. Konzentrat nach einem der vorstehenden Ansprüche,
wobei das Konzentrat einen G'-Wert von 30 bis 50000 Pa aufweist.

8. Konzentrat nach einem der vorstehenden Ansprüche,
wobei das Verhältnis zwischen dem Elastizitätsmodul G' und dem Viskositätsmodul G" mehr als 1 und weniger als 1000 beträgt.

9. Konzentrat nach einem der vorstehenden Ansprüche,
wobei der Fettgehalt weniger als 30 Gew.-% beträgt, und zwar auf das Gesamtgewicht des Konzentrats bezogen.

10. Konzentrat nach einem der vorstehenden Ansprüche,
wobei das Konzentrat in Form eines Gels eine Grenzdehnung für das lineare viskoelastische Verhalten ($\gamma_1$) von mindestens 10 % aufweist.

11. Verfahren zum Herstellen eines abgepackten wohlschmeckenden Nahrungsmittelkonzentrats in Form eines Gels für die Herstellung einer Bouillon, einer Suppe, einer Soße, einer Bratensoße oder für die Verwendung als Würze, das die folgenden Schritte aufweist:

   a) Bereitstellung einer Lösung, die Folgendes aufweist:

   - ein gelbildendes System,
   - ein flüssiges Polyol, wobei das flüssige Polyol in einer Menge von 0,1 bis 80 Gew.-% vorliegt, und zwar auf das Gesamtgewicht des Nahrungsmittelkonzentrats bezogen,

   wobei das flüssige Polyol aus der Gruppe von flüssigen Polyolen ausgewählt ist, die aus Glycerol, Propylenglycol, Glyceroltriacetat und Gemischen davon besteht,

   - 3 bis 30 Gew.-% Salz, und zwar auf das Gewicht des gesamten Nahrungsmittelkonzentrats bezogen,

   b) Überführen der vom Schritt a) resultierenden Lösung in eine Verpackung,
   c) Verschließen der Verpackung vom Schritt b), um ein abgepacktes wohlschmeckendes Nahrungsmittelkonzentrat in Form eines Gels für die Herstellung einer Bouillon, einer Suppe, einer Soße, einer Bratensoße oder für die Verwendung als Würze zu erhalten.

12. Verfahren nach Anspruch 11,
wobei die Lösung im Schritt a) auf eine Temperatur von 20 bis 130 °C erwärmt wird.

13. Verwendung des Konzentrats nach einem der Ansprüche 1 bis 10 für die Herstellung einer Bouillon, einer Suppe, einer Soße, einer Bratensoße oder für die Verwendung als Würze.

14. Verwendung einer flüssigen Polyols, um das erneute Gelieren eines flüssigen, verzehrfertigen Nahrungsmittelproduktes zu vermindern, das durch Auflösen eines Nahrungsmittelkonzentrats in Form eines Gels in einer wässrigen Flüssigkeit erhalten wurde.

**Revendications**

1. Concentré alimentaire salé emballé sous la forme d'un gel, pour la préparation d'un bouillon, d'une soupe, d'une sauce, d'un jus ou pour son utilisation comme assaisonnement, comprenant :

   - un système de gélification
   - une phase liquide comprenant un polyol liquide,
   - de 3 % en poids à 30 % en poids de sel, sur la base du poids du concentré alimentaire total,

   dans lequel le polyol liquide est présent en une quantité de 0,1 % en poids à 80 % en poids, sur la base du poids total du concentré alimentaire, le polyol liquide étant choisi dans le groupe de polyols liquides constitué par le glycérol, le propylène glycol, le triacétate de glycérol et leurs mélanges.

2. Concentré selon la revendication 1, dans lequel le système de gélification comprend l'un du groupe de systèmes de gélification constitué par la gélatine, l'amidon, l'amidon modifié, l'agar-agar, la pectine, le glucomannane, le carraghénane, le galactomannane en combinaison avec la gomme xanthane, le glucomannane en combinaison avec la gomme xanthane, le glucomannane en combinaison avec le carraghénane, le glucomannane en combinaison avec l'agar-agar, le galactomannane en combinaison avec le carraghénane, le galactomannane en combinaison avec l'agar-agar et leurs mélanges.

3. Concentré selon la revendication 2, dans lequel au moins 50 % en poids du système de gélification sont constitués d'un système de gélification selon la revendication 2.

4. Concentré selon l'une quelconque des revendications précédentes, dans lequel le polyol liquide est le glycérol.

5. Concentré selon l'une quelconque des revendications précédentes, dans lequel le système de gélification comprend une combinaison de gomme xanthane et d'un galactomannane, le polyol liquide est le glycérol en une quantité de 20 % en poids à 50 % en poids, et le sel est présent en une quantité de 5 % à 12 % en poids, sur la base du poids du concentré alimentaire total.

6. Concentré selon l'une quelconque des revendications 1 à 4, dans lequel le système de gélification comprend une combinaison de gomme xanthane et d'un galactomannane, le polyol liquide est le propylène glycol en une quantité de 20 % en poids à 65 % en poids, et le sel est présent en une quantité de 3 à 10 % en poids, sur la base du poids du concentré alimentaire total.

7. Concentré selon l'une quelconque des revendications précédentes, dans lequel le concentré a une valeur G' entre 30 et 50000 Pa.

8. Concentré selon l'une quelconque des revendications précédentes, dans lequel le rapport du module d'élasticité G' au module de viscosité G" est supérieur à 1 et inférieur à 1000.

9. Concentré selon l'une quelconque des revendications précédentes, dans lequel la teneur en matières grasses est inférieure à 30 % en poids, sur la base du poids total du concentré.

10. Concentré selon l'une quelconque des revendications précédentes, dans lequel le concentré sous la forme d'un gel à une contrainte limitante du comportement viscoélastique linéaire ($\gamma_1$) d'au moins 10 %.

11. Procédé de préparation d'un concentré alimentaire salé emballé, sous la forme d'un gel, pour la préparation d'un bouillon, d'une soupe, d'une sauce, d'un jus ou pour son utilisation comme assaisonnement, comprenant les étapes de :

    a) fourniture d'une solution comprenant :

       - un système de gélification,
       - un polyol liquide, le polyol liquide étant présent en une quantité de 0,1 % en poids à 80 % en poids, sur la base du poids total du concentré alimentaire, le polyol liquide étant choisi dans le groupe de polyols liquides constitué par le glycérol, le propylène glycol, le triacétate de glycérol et leurs mélanges,
       - de 3 % en poids à 30 % en poids de sel sur la base du poids du concentré alimentaire total,

b) transfert de la solution résultant de l'étape a) dans un emballage,

c) fermeture de l'emballage de l'étape b) pour obtenir un concentré alimentaire salé emballé sous la forme d'un gel, pour la préparation d'un bouillon, d'une soupe, d'une sauce, d'un jus ou pour son utilisation comme assaisonnement.

12. Procédé selon la revendication 11, dans lequel la solution de l'étape a) est chauffée à une température entre 20°C et 130°C.

13. Utilisation du concentré selon l'une quelconque des revendications 1 à 10, pour préparer un bouillon, une soupe, une sauce, un jus ou pour son utilisation comme assaisonnement.

14. Utilisation d'un polyol liquide pour réduire la re-gélification d'un produit alimentaire liquide prêt à consommer obtenu par la dissolution d'un concentré alimentaire sous la forme d'un gel dans un liquide aqueux.

## Fig.1.

Légendes des figures

Fig. 1

| G' plateau | Plateau G' |
|---|---|
| G' limit | limite G' |
| % strain | % de contrainte |
| γ Limit | Limite γ |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007068484 A
- WO 03015538 A
- US 4140809 A
- US 6086937 A

### Non-patent literature cited in the description

- **THOMAS G MEZGER.** The rheology handbook
- **THOMAS MEZGER.** Das Rheologie Handbuch. Curt R. Vincentz-Verlag, 2000